# EUROPÄISCHE PATENTSCHRIFT

(11) **EP 1 449 874 B1**
(45) Veröffentlichungstag und Bekanntmachung des Hinweises auf die Patenterteilung: **09.07.2008**
(21) Anmeldenummer: 04002757.5
(22) Anmeldetag: 07.02.2004
(51) Int. Cl.: C08L 15/00, C08K 5/14

(54) **Kautschukzusammensetzung**
Rubber composition
Composition de caoutchouc

(30) Priorität: 20.02.2003 DE 10307137
(43) Veröffentlichungstag der Anmeldung: 25.08.2004
(73) Patentinhaber: LANXESS Deutschland GmbH, 51369 Leverkusen (DE)
(72) Erfinder: Achten, Dirk, Dr., 50823 Köln (DE)

(56) Entgegenhaltungen:
- EP-A- 0 252 264
- EP-A- 0 864 607
- EP-A- 1 195 403

## Beschreibung

Diese Erfindung betrifft eine Zusammensetzung, die einen hydrierten Nitrilbutadienkautschuk (HNBR), ein peroxidisches Vernetzungssystem und ein Resorcinol-Formaldehyd-Harz enthält, ein Verfahren zur Herstellung dieser Zusammensetzung, die Verwendung der Zusammensetzung als Haftvermittler sowie ein mehrschichtiges Erzeugnis enthaltend die erfindungsgemäße Zusammensetzung.

Es besteht ein großer Bedarf an Zusammensetzungen, die man als Haftgrundlagen für unbehandelte Gewebe und Festigkeitsträger verwenden kann. Unter unbehandelten Geweben und Festigkeitsträgern werden in diesem Zusammenhang Gewebe und Festigkeitsträger verstanden die nicht speziell für Haftzwecke oberflächenvergütet wurden z.B. durch Beschichtungsverfahren aus Lösung (Imprägnierungsverfahren) oder mit Latex Dips. Dabei muss die Bindung zwischen der Oberfläche des Trägermaterials und dem Gummi so stark sein, dass diese nicht die Schwachstelle im Verbundsystem darstellt.

Im Stand der Technik ist eine direkte Umsetzung des Kautschuks mit nicht vorbehandeltem Trägermaterial und anschließender peroxidischer Vernetzung nicht bekannt. Analoge Direkthaftungsverfahren sind nur mit Schwefel vulkanisierbaren Systemen wie Polychloropren und Nitrilkautschuk im Handbuch für die Gummiindustrie, 2. Auflage, 1991, S. 500, Herausgeber, Bayer AG beschrieben. Eine Anwendung dieses Verfahrens bei peroxidisch vulkanisierten Systemen auf Basis von HNBR ist im Stand der Technik nicht offenbart.

Um eine gute Anbindung des eigentlichen Kautschuks der peroxidisch vernetzt werden soll, an das Trägermaterial zu gewährleisten, müssen diese vorbehandelt werden. Für die Vorbehandlung werden die Trägermaterialien z.B. mit einem Latex oder einer Lösung, zur Aufbringung einer sogenannten Ausrüstungsschicht, behandelt. Diese Ausrüstungsschichten beinhalten mehrere chemisch unterschiedliche Bestandteile. Diese bestehen in der Regel aus einem Kautschuk ausgewählt aus der Gruppe bestehend aus Polychloropren, Polyvinylpyridin, Polybutadien oder Polybutadien―Copolymeren, wobei die Copolymere ausgewählt sind aus der Gruppe bestehend aus Acrylnitril, Styrol, oder Mischungen dieser Polymere. Weiterhin ist es oft angebracht zusätzliche Harze, wie Resorcin-Harze mit Härtern wie Formaldehyd (bzw. Formaldehydspenden) und gegebenenfalls Silan-Verbindungen dem Latex hinzu zumischen. Diese Latices werden als RFL Latex (Resorcin-Formaldehyd-Latex) bezeichnet.

Das Trägermaterial wird in den Latex eingetaucht, getrocknet und ausreagiert und anschließend der eigentliche Kautschuk auf dieses so vorbehandelte Trägermaterial aufvulkanisiert. Hierbei kann sowohl mit Schwefel oder Schwefelsystemen als auch peroxidisch vulkanisiert werden.

Die mit klassischen Latices auf Basis von Polybutadien oder Polybutadien―Copolymeren, Polychloropren oder Polyvinylpyridin getauchten Gewebe zeigen deutliche Schwächen, besonders nach Alterung, bei der Verwendung von peroxidisch vernetzten Kautschuken, die im nächsten Schritt der Fertigung verwendet werden.

In EP-B1 0 252 264 und US-A 5 176 781 wird daher zur Verbesserung der Alterungseigenschaften der Einsatz von Latices auf Basis von teilhydriertem HNBR und/oder in Kombination mit klassischen Latices mit RFL Systemen offenbart.

Zur Herstellung der so erhaltenen für die Haftung zu peroxidisch vulkanisierbaren Gummimischungen aktivierten Trägermaterialien sind häufig mehrere aufeinanderfolgende Dipzyklen oder Tauchzyklen notwendig.

Die Aufgabe der vorliegenden Erfindung ist es daher eine Zusammensetzung bereitzustellen, die es ermöglicht auf dem jeweiligen Trägermaterial direkt einen HNBR-Kautschuk aufzuvulkanisieren ohne das der Festigkeitsträger vorbehandelt werden muss.

Diese Aufgabe wird gelöst durch einen Verbunderhältlich durch Vulkanisieren einer Zusammensetzung enthaltend
a) 0, 1 bis 99,4 Gew.-% eines HNBR- Kautschuk,
b) 0,1 bis 20 Gew.-% eines peroxidischen Vernetzungssystems und
c) 3 bis 45 Gew.-% eines Resorcinol-Formaldehyd-Harzes.

Vorteilhaft besitzt der HNBR-Kautschuk der erfindungsgemäßen Zusammensetzung einen Nitrilgruppengehalt von 10 bis 50 Gew.-%.

Vorteilhaft enthält die erfindungsgemäße Zusammensetzung noch weitere Füllstoffe und Additive.

Vorteilhaft enthält die erfindungsgemäße Zusammensetzung zusätzlich zu den weiteren Füllstoffen und Additiven noch 0 bis 40 Gew.-% an Metallacrylaten und / oder Methacrylaten.

Ein weiterer Gegenstand ist ein Verfahren zur Herstellung eines Verbundes, wobei die erfindungsgemäße Zusammensetzung mit einem Trägermaterial vulkanisiert wird.

Vorteilhaft wird bei dem Verfahren zur Herstellung eines Verbundes das Trägermaterial als Gewebe oder Kord ausgewählt aus der Gruppe bestehend aus Polyamid, Polyester, Polyaramid, Rayon oder Glas.

Vorteilhaft ist der Verbund, der durch Vulkanisation der erfindungsgemäßen Zusammensetzung und dem Trägermaterial erhältlich ist, ausgewählt aus der Gruppe bestehend aus Zahnriemen, Keilriemen, Transportbändern, Schläuchen, Blasen, Membranen, Reifen, Luftfedern und Gummimuskeln:

Die erfindungsgemäße Zusammensetzung enthält 0,1 bis 99,4 Gew.-% eines HNBR-Kautschukes. Bevorzugt sind 20 bis 70 Gew.-%, ganz besonders bevorzugt sind 30 bis 60 Gew.-%. Unter dem Begriff HNBR-Kautschuk sollen hierbei die einfachen HNBR-Kautschuke wie auch die carboxylierten HNBR-Kautschuke (HXNBR) sowie hydrierte HNBR-Copolymere aus Butadien, Acrylnitril sowie weiteren acrylischen oder vinylischen Monomeren zu verstehen sein. Bei dem HNBR-Kautschuken handelt es sich um einen hochhydrierten Nitril-Butadien- oder Nitril-Butadien-Copolymer-Kautschuk. Dabei ist unter hochhydriert ein Gehalt an Doppelbindungen im HNBR-Kautschuk zu verstehen, der geringer als 40 Doppelbindung pro 1000 C-Atome, bevorzugt geringer als 15 pro 1000 C-Atome, besonders bevorzugt im Bereich von 0,2 bis 15 Doppelbindungen pro 1000 C-Atome liegt. Bevorzugt besitzt der HNBR-Kautschuk für die erfindungsgemäße Zusammensetzung einen Nitrilgruppengehalt im Bereich von 10 bis 50 Gew.-%, bevorzugt im Bereich von 15 bis 39 Gew.-%, ganz besonders bevorzugt im Bereich von 20 bis 36 Gew.-% bezogen auf den Gesamtanteil des HNBR-Kautschuks.

Die Teil- und/oder Vollhydrierung eines NBR-Kautschuks wird in DE-A 2 539 132, DE-A 3 329 974, DE 3 056 008, DE-A 3 046 251, EP-A 111 412 und WO-A 01/77185 beschrieben. Hierbei wird der HNBR-Kautschuk in Lösung hergestellt, die später in Festkautschuk überführt wird.

Der zur Herstellung des HNBR-Kautschuks verwendete Nitril-Butadienkautschuk besitzt vorzugsweise eine statistische Verteilung der Monomereinheiten. Als Monomere für die Herstellung des NBR-Kautschuks kommen alle dem Fachmann bekannten mit Acrylnitril und Butadien in Emulsion copolymerisierbaren ungesättigten Monomere in Frage. Bevorzugt sind Copolymerisate auf Basis von Acrylnitril und Butadien sowie von Acrylnitril, Butadien, Vinylmonomeren und Acrylat- bzw. Methacrylatestern sowie deren freie Säuren.

Bevorzugt werden als ungesättigte Monomere zur Copolymerisation Vinylbenzole wie Styrol, Divinylbenzol, Methylstyrol, Methacrylonitril, Acrylate wie Methylacrylat, Ethylacrylate, Butylacrylat, 2-Ethylhexylacrylat, und Methacrylate wie Methylmethacrylat, Ethylmethacrylate, Butylmethacrylat, 2-Ethylhexylmethacrylat sowie deren freie Säuren, Acryl-, Methacrylsäure, Maleinsäureanhydrid, Fumarsäure sowie Itaconsäure.

In der erfindungsgemäßen Zusammensetzung sind 0,1 bis 20 Gew.-%, bevorzugt 3 bis 15. Gew.-% eines peroxidischen Vernetzungssystems enthalten. Dieses peroxidische Vernetzungssystem enthält einen Radikalgenerator bevorzugt in Kombination mit einen Aktivator. Der Anteil des Aktivators am gesamt Vernetzungssystem beträgt 0 bis 95 Gew.-%, bevorzugt 20 bis 70 Gew.-%. Der Anteil des Radikalgenerators am gesamten Vernetzungssystem liegt im Bereich von 5 bis 100 Gew.-%, bevorzugt im Bereich von 30 bis 80 Gew.-%. Als Aktivatoren können zum Beispiel Triallylisocyanurat und Triallylcyanurat, Di- und Triacrylate, cis 1,2 Polybutadien, m-N',N Phenylendimaleimid und andere Einsatz finden. Besonders bevorzugt sind Triallylisocyanurat, Triallylcyanurat und Trimethylolpropantrimethacrylat.

Als Radikalgeneratoren werden solche Verbindungen verwendet, deren 10-Stunden-Halbwertszeit in Benzol über 80°C liegen. Besonders bevorzugt sind peroxidische Radikalgeneratoren wie z.B. Ditertiärbutylperoxid, Ditertiärbutylperoxyisopropylbenzol, Dibenzoylperoxid, Tertiärbutylcumylperoxid und Andere.

In der erfindungsgemäßen Zusammensetzung sind 3 bis 15 Gew.-% eines Resorcin-Formaldehyd-Harzes enthalten. Bei dem Resorcin-Formaldehyd-Harz handelt es sich um ein Direkthaftmittel, das als Kondensationsprodukt von Phenolderivaten mit Formaldehyd und/oder Formaldehydspendern erhalten werden kann. Bevorzugte Resorcin-Formaldehyd-Harze sind zum Beispiel Produkte wie Bondingagent R6® der Firma Uniroyal, die Produkte aus der Produktfamilie Cohedur® und Vulkadur® der Firma Bayer AG. Bevorzugt wird als Phenol- oder Phenolderivatkomponente Resorcinol verwendet. Als Formaldehydkomponente finden häufig Verbindungen wie Hexamethoxymethylmelamine Verwendung. Das Resorcinol-Formaldehyd System kann sowohl in Form der Einzelkomponenten (z.B. Cohedur RL® von der Firma Bayer AG) wie auch in vorkondensierter Form (z.B. Vulkadur T) zum Einsatz kommen. Durch Zusatz von geeigneten Katalysatoren (Kieselsäure wie z.B. Vulkasil A1® (halb aktives gefälltes Aluminium Natriumsilikat, pH 10-12, Oberfläche 60 m³/g), Vulkasil N1® (aktive gefällte Kieselsäure, pH 7, Oberfläche 130 m³/g) von der Firma Bayer AG) können die Reaktivität und die Hafteigenschaften noch beeinflusst werden. In der erfindungsgemäßen Zusammensetzung können 0 bis 75 Gew.-% weitere Füllstoffe und Additive enthalten sein. Diese werden bevorzugt in 5 bis 75 Gew.-%, besonders bevorzugt in 30 bis 60 Gew.-% bezogen auf Gesamtzusammensetzung der erfindungsgemäßen Zusammensetzung, eingesetzt. Unter Füllstoffe und Additiven sind alle dem Fachmann bekannten Füllstoffe und Additive zu verstehen, die im Bereich der vulkanisierten Kautschukverbunde eingesetzt und wie im Handbuch für die Gummiindustrie, 2. Auflage, 1991, Herausgeber, Bayer AG, beschrieben werden. Bevorzugt sind Ruß, Kieselsäure, Anorganische Oxide, Stabilisatoren, Weichmacher, Verarbeitungshilfsmittel, Alterungsschutzmittel.

Bevorzugt werden der erfindungsgemäßen Zusammensetzung 0 bis 40 Gew.-%, bevorzugt 5 bis 30 Gew.-% bezogen auf die Gesamtzusammensetzung der erfindungsgemäßen Zusammensetzung weiterer Metallacrylate und / oder Methacrylate hinzugefügt. Besonders bevorzugte Metall-(meth)-acrylate sind Zinkdiarcylate und Zinkdimethacrylate.

Zur Herstellung der erfindungsgemäßen Zusammensetzung werden die Komponenten a), b) und c) mit einander vermischt. Zur Vermischung werden dem Fachmann bekannte Aggregate wie Innenmischer und Walzen verwendet. Die Herstellung der Mischung wird bei den dem Fachmann bekannten Temperaturen durchgeführt. Bevorzugt ist ein Temperaturbereich von 40 bis 140°C.

Ein weiterer Gegenstand der Erfindung ist ein Verfahren zur Herstellung eines Verbundes aus einem Trägermaterial und der erfindungsgemäßen Zusammensetzung.

Unter dem Trägermaterial sind alle Gewebe und Korde zu verstehen, die aus einem Fasermaterial aufgebaut sind. Das Fasermaterial ist dabei ausgewählt aus der Gruppe bestehend aus Baumwolle, Rayon, Polyamidfasern wie Polycaprolactam, Poly(decamethylencarboxamid) Poly(hexamethtylenadipamid und andere), Polyaramidfasern (Poly(m)-phenyleneisophthalamid), Poly(p)-phenyleneisophthalamid und andere), Polyesterfasern wie Polyethylentherephthalat, Polybutylentherephthalat, Poly(cyclohexane 1,4-dimethylen terephthalat und andere, Glasfasern, Stahlcord. Bevorzugt sind dabei Fasermaterialien aufgebaut aus der Gruppe bestehend aus Polyamid, Polyester, Polyaramid, Rayon und Glas.

Zur Herstellung solcher Verbunde wird die erfindungsgemäße Zusammensetzung mit dem Trägermaterial bei Temperaturen im Bereich von 120 bis 220°C, bevorzugt von 150 bis 200°C und einem Druck von 0,5 bis 50 bar, bevorzugt im Bereich von 2 bis 20 bar vulkanisiert. Die Vulkanisation erfolgt in den dem Fachmann bekannten Pressen, die die Form des erhaltenen Verbundes vorgeben.

Bevorzugt wird ein Verbund hergestellt, der ausgewählt ist aus der Gruppe bestehend aus Reifen, Transportbändern, Riemen aller Art wie Zahnriemen, Keilriemen, verstärkte Schläuche wie Feuerlöscherschläuche, gummierte Gewebe, Luftfedern und Gummimuskeln.

Die so erhaltenen Verbunde zeichnen sich durch eine besonders gute Haftung zwischen dem Trägermaterial und dem Kautschuk auch bei Alterung aus. Die erhaltenen Verbunde besitzen eine gute Hitze- und Ölbeständigkeit und gute mechanische Eigenschaften wie Zugfestigkeit und Bruchdehnung. Vorteilhaft gegenüber den herkömmlichen Verbunden ist die einfache, schnellere und ökonomischere Herstellung dieser Verbunde, da ein aufwendiges Tauchverfahren zur Vorbehandlung des Trägermaterials entfällt.

### Beispiele

Nicht erfindungsgemäße Vergleichsmischungen und daraus resultierende Vergleichsbeispiele sind mit # gekennzeichnet.

**Tabelle 1: Rezeptur verschiedener Formulierungen zum Gebrauch als Haftmischung für Festigkeitsträger. Die Mischungsbestandteile werden in Teilen bezogen auf die eingesetzte Gesamtkautschukmenge HNBR (Therban) angegeben.**

| **Mischungsbestandteile** | **1** | **2** | **3** | **4** | **5** | **6** | **7** | **8#** | **9#** |
|---|---|---|---|---|---|---|---|---|---|
| **Therban VP KA 8889¹** | **100** | **100** | | **10** | **10** | **10** | **10** | | **10** |
| **Therban C3446²** | | | **100** | **90** | **90** | **90** | **90** | **100** | **90** |
| **Rhenofit DDA-70³** | **2** | **2** | **2** | **2** | **2** | **2** | **2** | **2** | **2** |
| **Corax N 550⁴** | **30** | **30** | **30** | **30** | **30** | **30** | **30** | **30** | **30** |
| **Cohedur RL⁵** | **15** | **15** | **15** | **5** | **10** | **15** | **5** | | |
| **Sartomer SR 633⁶** | | | | | | | **30** | | |
| **Struktol ZP1014⁷** | **6** | **6** | | | | | | | |
| **Aluminiumstearat⁸** | | **4** | | | | | | | |
| **Stearinsäure⁹** | | **1,5** | **1** | | | | | | |
| **PERKADOX 14-40 B-gr¹⁰** | | | **4** | **5** | **5** | **5** | **5** | **5** | **5** |

| | | | | | | | | | |
|---|---|---|---|---|---|---|---|---|---|
| Therban VPKA 8889¹ von Bayer (hydriertes Acrylnitril -Butadien - Methacrylsäure Terpolymer-)(HXNBR)) | | | | | | | | | |
| Therban C3446² von Bayer (hydriertes Acrylnitril -Butadien Copolymer (HNBR)) | | | | | | | | | |
| Rhenofit DDA-70³ von Rheinchemie (70 % Diphenylamin-Derivat (dry-liquid)) | | | | | | | | | |
| Corax N 550⁴ Ruß, FEF Fast Extruding Furnace von Degussa | | | | | | | | | |
| Cohedur RL⁵ 45,5 % Resorcinol, 45,5 % Cohedur A 700, 9 % Dibutylphthalat von Bayer. | | | | | | | | | |
| Sartomer Saret S633⁶ von Cray, mit Verzögerer versetztes Metalldiacrylat | | | | | | | | | |
| Struktol ZP 1014⁷von Schill + Seilacher, Zinkperoxid ca. 55 % Staubreies Zink Peroxid mit Dispergierungsmittel versehen, Beschleuniger für XNBR und HNBR Vulkanisation | | | | | | | | | |
| Aluminiumstearat⁸ von Riedel de Haen AG | | | | | | | | | |
| Tefacid RG⁹ von Tefac (Stearinsäure) | | | | | | | | | |
| Perkadox 14-40 B-gr¹⁰ DI-(TERT, BUTYL-PEROXY-ISOPROPYL)-Benzol 40%ig von Akzo-Nobel | | | | | | | | | |

Zur Herstellung der Mischung werden die Bestandteile auf einer Mischwalze in der Reihenfolge Kautschuk, Ruß, Zinkdiacrylat, Stabilisatoren, Peroxid und Verarbeitungshilfsmittel zugemischt. Die Walze hat eine Temperatur von 60°C.

**Tabelle 2: Ergebnisse physikalischer Prüfungen der Mischungseigenschaften vor Vulkanisation**

| **Mischung** | **1** | **2** | **3** | **4** | **5** | **6** | **7** | **8#** | **9#** |
|---|---|---|---|---|---|---|---|---|---|
| **Anvulkanisation Nach DIN 53523 TS 5 / 120 °C (min)** | **47,6** | **8,8** | **>50** | **> 50** | **> 50** | **> 50** | **> 50** | **> 50** | **> 50** |

**Tabelle 3:Ergebnisse physikalischer Prüfungen der Vulkanisateigenschaften der Zusammensetzung ohne Festigkeitsträger bei Raumtemperatur. Die Vulkanisation erfolgte bei 180°C für 20 min bei 30 bar.**

| **Mischung** | **1** | **2** | **3** | **4** | **5** | **6** | **7** | **8#** | **9#** |
|---|---|---|---|---|---|---|---|---|---|
| **Zugversuch nach DIN 53504** | | | | | | | | | |
| **Zugfestigkeit (MPa)** | **28,8** | **32** | **23** | **23,7** | **21,9** | **20,7** | **27,9** | **28** | **27,2** |
| **Bruchdehnung (%)** | **221** | **265** | **517** | **489** | **468** | **461** | **290** | **507** | **519** |
| **Modul bei Dehnung 50% (MPa)** | **5,3** | **5,0** | **1,4** | **1,2** | **1,3** | **1,4** | **4,8** | **1,2** | **1,2** |
| **Modul bei Dehnung 100% (MPa)** | **12,1** | **11** | **2** | **1,9** | **2,1** | **2,1** | **10,1** | **1,8** | **1,9** |
| **Modul bei Dehnung 200% (MPa)** | **26,5** | **26** | **5,4** | **5,8** | **6,5** | **6,2** | **21,8** | **5,6** | **5,7** |
| **Modul bei Dehnung 300% (MPa)** | **----** | **----** | **10,8** | **12,2** | **12,8** | **12,3** | **----** | **12,1** | **11,9** |
| **Weitereißwiderstand nach DIN 53515 (N)** | | | | **12,6** | **13,5** | **13,2** | **17,1** | **11,8** | **12,7** |
| **Härtemessung (3 x 2mm Stab) nach DIN 53505 (Shore A)** | **82** | **82** | **63** | **60** | **61** | **63** | **84** | **59** | **59** |

**Tabelle 4: Ergebnisse der Haftungsprüfungen an verschiedenen Textilgeweben. Die Trennfestigkeiten wurden bei 23°C nach DIN 53530 bei einer Abzugsgeschwindigkeit von 100 mm/min bestimmt. Verglichen wurden die Trennfestigkeiten der Mischungen 1-9 von einem Polyamidgewebe, demselben aber handelsüblich mit HNBR-RFL-Latex beschichteten Polyamidgewebe und einem Rayon Gewebe an den in DIN 53530 beschriebenen Peel-Test-Probekörpern. Die Probekörper wurden bei 180°C für 30 min bei 30 bar vulkanisiert.**

| **Mischung** | **1** | **2** | **3** | **4** | **5** | **6** | **7** | **8#** | **9#** |
|---|---|---|---|---|---|---|---|---|---|
| **Trennfestigkeit** | **N/25mm** | | | **N/10mm** | | | | | |
| **Polyamid - Gewebe Unbehandelt** | **157*** | **220*** | **384*** | **125*** | **126*** | **110*** | **61**** | **8**** | **5**** |
| **Polyamid - Gewebe RFL-HNBR beschichtet** | **13,4**** | **17,8**** | **94**** | | | | | | |
| **Rayon - Gewebe unbehandelt** | | | | **43**** | **49**** | **50**** | **25**** | **25**** | **26**** |

| | | | | | | | | | |
|---|---|---|---|---|---|---|---|---|---|
| *Gummibruch | | | | | | | | | |
| **Bruch am Übergang Gewebe Mischung | | | | | | | | | |

## Patentansprüche

1. Verbund erhältlich durch Vulkanisieren einer Zusammensetzung enthaltend
a) 0,1 bis 98,4 Gew.-% eines HNBR- Kautschuk,
b) 0,1 bis 20 Gew.% eines peroxidischen Vernetzungssystems und
c) 3 bis 15 Gew.-% eines Resorcinol-Formaldehyd Harzes,
und einem Trägermaterial.

2. Verbund nach Anspruch 1, wobei der HNBR-Kautschuk in der Zusammensetzung einen Nitrilgruppengehalt von 10 bis 50 Gew.-% besitzt.

3. Verbund nach einem der Ansprüche 1 bis 2, wobei die Zusammensetzung noch weitere Füllstoffe und Additive enthalten kann.

4. Verbund nach einem der Ansprüche 1 bis 3, wobei zusätzlich zu den weiteren Füllstoffen und Additiven noch 0 bis 40 Gew.-% an Metallacrylaten und/oder Methacrylaten enthalten sein können.

5. Verfahren zur Herstellung eines Verbundes nach einem der Ansprüche 1 bis 4, wobei die Zusammensetzung mit einem Trägermaterial vulkanisiert wird.

6. Das Verfahren nach Anspruch 5, wobei das Trägermaterial ausgewählt ist aus der Gruppe bestehend aus Polyamid, Polyester, Polyaramid, Rayon, Glas.

7. Der Verbund nach einem der Ansprüche 1 bis 4, wobei der Verbund ausgewählt ist aus der Gruppe bestehend aus Zahnriemen, Keilriemen, Transportbändern, beschichteten Geweben, Schläuchen, Blasen, Reifen, Luftfedern und Gummimuskeln.

## Claims

1. Composite obtainable by vulcanization of a composition comprising
a) 0.1 to 98.4 wt.% of an HNBR rubber,
b) 0.1 to 20 wt.% of a peroxidic crosslinking system, and
c) 3 to 15 wt.% of a resorcinol-formaldehyde resin,
with a carrier material.

2. Composite according to Claim 1, wherein the HNBR rubber in the composition has a nitrile group content of 10 to 50 wt.%.

3. Composite according to either of Claims 1 and 2, wherein the composition may further comprise further fillers and additives.

4. Composite according to any one of Claims 1 to 3, wherein 0 to 40 wt.% of metal acrylates and/or methacrylates may be present in addition to the further fillers and additives.

5. Process for the production of a composite according to any one of Claims 1 to 4, wherein the composition is vulcanized with a carrier material.

6. The process according to Claim 5, wherein the carrier material is selected from the group consisting of polyamide, polyester, polyaramid, rayon and glass.

7. The composite according to any one of Claims 1 to 4, wherein the composite is selected from the group consisting of toothed belts, V-belts, conveyor belts, coated fabrics, hoses, bladders, tyres, pneumatic springs and rubber muscles.

## Revendications

1. Composite que l'on peut obtenir par vulcanisation d'une composition contenant :
a) 0,1 à 98,4 % en poids d'un caoutchouc HNBR,
b) 0,1 à 20 % en poids d'un système de réticulation peroxydique et
c) 3 à 15 % en poids d'une résine de résorcinol-formaldéhyde,
avec un matériau de support.

2. Composite selon la revendication 1, dans lequel le caoutchouc HNBR de la composition possède une teneur en groupes nitrile de 10 à 50 % en poids.

3. Composite selon l'une des revendications 1 à 2, dans lequel la composition peut contenir encore d'autres matières de charge et additifs.

4. Composite selon l'une quelconque des revendications 1 à 3, dans lequel 0 à 40 % en poids d'acrylates et/ou de méthacrylates métalliques peuvent être encore contenus en plus des autres matières de charge et additifs.

5. Procédé de préparation d'un composite selon l'une quelconque des revendications 1 à 4, dans lequel la composition est vulcanisée avec un matériau de support.

6. Procédé selon la revendication 5, dans lequel le matériau de support est sélectionné parmi le groupe constitué du polyamide, du polyester, du polyaramide, de la rayonne, du verre.

7. Composite selon l'une quelconque des revendications 1 à 4, dans lequel le composite est sélectionné parmi le groupe constitué de courroies crantées, de courroies trapézoïdales, de bandes transporteuses, de tissus revêtus, de tuyaux, de soufflets, de pneus, d'amortisseurs pneumatiques et de muscles en caoutchouc.
